# EUROPÄISCHE PATENTSCHRIFT

(11) **EP 2 745 348 B1**
(45) Veröffentlichungstag und Bekanntmachung des Hinweises auf die Patenterteilung: **19.07.2017**
(21) Anmeldenummer: 12746321.4
(22) Anmeldetag: 08.08.2012
(51) Int. Cl.: F28F 3/00, F28F 21/02, C04B 35/536, B32B 27/00, B32B 9/00, H01M 10/653, H01M 10/6555, H01M 10/613, F28D 21/00, H01M 10/0525

(54) **WÄRMEABLEITER UND ELEKTRISCHER ENERGIESPEICHER**
HEAT SPREADER AND ELECTRIC ENERGY STORE DEVICE
DISSIPATEUR DE CHALEUR ET ACCUMULATEUR D'ÉNERGIE ÉLECTRIQUE

(30) Priorität: 17.08.2011 DE 102011081149
(43) Veröffentlichungstag der Anmeldung: 25.06.2014
(73) Patentinhaber: SGL Carbon SE, 65201 Wiesbaden (DE)
(72) Erfinder: ÖTTINGER, Oswin, 86405 Meitingen (DE); SCHMITT, Rainer, 86405 Meitingen (DE); BACHER, Jürgen, 86405 Meitingen (DE); LANGER, Werner, 86405 Meitingen (DE)
(86) Internationale Anmeldenummer: PCT/EP2012/065503
(87) Internationale Veröffentlichungsnummer: WO 2013/023969

(56) Entgegenhaltungen:
- EP-A1- 1 588 994
- EP-A2- 0 451 635
- EP-A2- 1 512 933
- EP-A2- 2 081 225
- WO-A1-2009/019195
- WO-A1-2011/101391
- WO-A1-2012/055620
- DE-B4- 10 341 255
- US-A1- 2005 079 304
- ALRASHDAN A ET AL: "Thermo-mechanical behaviors of the expanded graphite-phase change material matrix used for thermal management of Li-ion battery packs", JOURNAL OF MATERIALS PROCESSING TECHNOLOGY, ELSEVIER, NL, Bd. 210, Nr. 1, 1. Januar 2010 (2010-01-01), Seiten 174-179, XP026746773, ISSN: 0924-0136, DOI: 10.1016/J.JMATPROTEC.2009.07.011 [gefunden am 2009-07-18]

## Beschreibung

Die Erfindung betrifft einen Wärmeableiter nach dem Oberbegriff des Anspruchs 1 sowie einen elektrischen Energiespeicher nach dem Oberbegriff des Anspruchs 19. Aus der US 2006/0134514 A1 ist eine Traktionsbatterie für elektrische Fahrzeuge mit einer Vielzahl von in einem Gehäuse angeordneten, elektrisch miteinander verschalteten Batteriezellen bekannt. Durch die bei derartigen Batterien üblichen Lade-Entlade-Zyklen während des Betriebs wird in den Batteriezellen Wärme erzeugt. Nachteilig für die Lebensdauer und Zuverlässigkeit der Batteriezellen sind insbesondere sogenannte Hotspots, also lokal konzentrierte Überhitzungspunkte, welche im ungünstigsten Fall die betreffende Batteriezelle zerstören können. Um dieses Problem zu beheben, sind an Seitenflächen und insbesondere zwischen benachbarten Seitenflächen der Batteriezellen Folien oder Platten aus einem Material mit einer Wärmeleitfähigkeit in Flächenrichtung von mehr als 250 W/(m K) und in Dickenrichtung von weniger als 20 W/(m K) angeordnet. Die Folien oder Platten können aus Graphit bestehen.

Herkömmlich wird hierfür auch Aluminium eingesetzt. Beispielsweise sind Lithium-Ionen-Batterien so aufgebaut, dass um eine sogenannte Pouch-Zelle eine Hülle aus Aluminiumfolie vorgesehen ist. Diese trägt nicht nur zur Wärmeableitung bei, sondern stabilisiert außerdem die Zelle noch mechanisch.

Ein Beispiel für eine graphithaltige Folie oder Platte offenbart die EP 0 806 805 B1, welche ein Batteriesystem mit einem Wärmeleiter betrifft. Die Wärmeleitfunktion des Wärmeleiters wird dort durch graphithaltige Faserwerkstoffe bereitgestellt. Die EP 1 512 933 A2 offenbart einen Wärmeableiter mit einem graphithaltigen Flachmaterial, wobei das graphithaltige Flachmaterial einen Graphitexpandatformling 3 enthält, der eine Dichte von 0,05 bis 0,6 g/cm aufweist, wobei eine oder mehrere Oberflächen der Wärmeableiter partiell oder komplett mit Anstrichen, Überzügen oder Beschichtungen, wie z.B. einer Kunststofffolie, versehen sein können. Es hat sich herausgestellt, dass Batteriezellen aufgrund der ständigen Lade- und Entladezyklen im Betrieb eine hohe Dickenänderung aufweisen, bei Lithium-Ionen-Batteriezellen beispielsweise zwischen 0,5 bis 10 %. Aluminiumfolien geben jedoch einer Volumenausdehnung der miteinander verspannten Batteriezellen fast nicht nach. Insbesondere können bei der nachfolgenden Volumenverringerung, bei der sich die Abstände zwischen den Batteriezellen wieder vergrößern, die hierdurch entstehenden Freiräume von den Platten nicht wieder aufgefüllt werden. Hierdurch entstehen einerseits große mechanische Spannungen und andererseits eine schlechte Kontaktierung der Seitenflächen der Batteriezellen. Gerade in letzterem Fall kann aufgrund schlechter oder gänzlich fehlender Verbindung der Platten zu den Batteriezellen nicht sichergestellt werden, dass die durch Hotspots entstehende Wärme schnell in Flächenrichtung der Platten verteilt wird. Darüber hinaus kann bei einem dauerhaft hohen Wärmeeintrag in die Platten aufgrund deren begrenzter Wärmespeicherfähigkeit die Wärme der Hotspots nicht mehr ausreichend schnell verteilt werden. Daher wird bei herkömmlichen Lithium-Ionen-Batterien zwischen den Pouch-Zellen eine elastische Matte beispielsweise aus Gummi oder Silicon angeordnet, die die Volumenänderung kompensieren und auch einen gewissen Anteil an der Wärmeleitung übernehmen soll. Mit einer geringen Wärmeleitfähigkeit von ca. 0,5 W/mK wird jedoch der Vorteil der hohen Wärmeleitfähigkeit von Aluminium wieder zunichte gemacht.

Um bei den oben genannten Graphitplatten oder -folien die angegebene starke Anisotropie der Wärmeleitfähigkeit in Flächen- und Dickenrichtung zu erreichen, muss der Graphit nach bisherigem Wissensstand eine sehr hohe Dichte aufweisen, typischerweise von mehr als 1,5 g/cm³. Derartig hochverdichtete Graphitfolien bzw. - platten sind jedoch sehr fest und nur wenig kompressibel und elastisch. Daher haben sie schlechte Atmungseigenschaften, d.h. sie können bei einer Volumenausdehnung der miteinander verspannten Batteriezellen wenig nachgeben.

Es ist deshalb Aufgabe der Erfindung, einen Wärmeableiter sowie einen Energiespeicher bereitzustellen, welche die oben genannten Nachteile überwinden und eine gleichmäßige Wärmeverteilung an den Batteriezellen sowie die Abführung von überschüssiger Wärmeenergie ermöglichen.

Diese Aufgabe wird durch einen Wärmeableiter mit den Merkmalen des Anspruchs 1 sowie einen elektrischen Energiespeicher mit den Merkmalen des Anspruchs 12 gelöst. Vorteilhafte Weiterbildungen und bevorzugte Ausgestaltungen des Wärmeableiters sowie des Energiespeichers sind in den Unteransprüchen angegeben.

Ein eingangs genannter Wärmeableiter sowie elektrischer Energiespeicher sind erfindungsgemäß dadurch gekennzeichnet, dass das graphithaltige Flachmaterial des Wärmeableiters einen Graphitexpandatformling enthält, der eine Dichte von 0,1 bis 0,6 g/cm³ aufweist. Hierdurch kann überraschenderweise trotz geringer Komprimierung zur Herstellung des Graphitexpandatformlings eine hinreichend gute Wärmeleitfähigkeit in Flächenrichtung bereitgestellt werden. Üblicherweise wird Graphitexpandat unter relativ hohem Druck zu Graphitfolie verdichtet. Mit hohen Komprimierdrücken resultiert zum einen eine hohe Dichte von üblicherweise 1,3 bis 1,5 g/cm³ und zum anderen eine hohe Wärmeleitfähigkeit in Flächenrichtung der Graphitfolie von über 200 W/mK. Im erfindungsgemäßen Dichtebereich liegt die Wärmeleitfähigkeit mit bevorzugt 5 bis 50 W/mK zwar unterhalb der genannten für stark komprimiertes Graphitexpandat möglichen Werte, ist aber im Vergleich zu herkömmlich zwischen Pouchzellen eingesetztem Gummi mit einer Leitfähigkeit von 0,5 W/mK immer noch sehr gut.

Die Dichteangaben beziehen sich stets auf den reinen Graphitanteil. Gegebenenfalls vorliegende weitere Anteile, wie Kunststoffe, sind in diese Dichteangaben nicht einbezogen.

Gleichzeitig liegt eine gute Anpassungsfähigkeit des Graphitexpandatformlings an Volumenänderungen der Batteriezellen in beiden Richtungen vor - d.h. bei Volumenausdehnung und Volumenverringerung. Somit hat der Graphitexpandatformling den Vorteil sehr guter Atmungseigenschaften, wie sie herkömmlich eingesetztes Aluminium nicht besitzt. Zudem lässt sich der Graphitexpandatformling des Wärmeableiters wegen seiner geringen Dichte besonders gut an unterschiedlichste Formen von Batteriezellen anpassen. Gleichzeitig liegt noch eine gute Handhabbarkeit des Wärmeableiters vor. Der Dichtebereich, in dem der Graphitexpandatformling vorliegt, ist kennzeichnend für lediglich gering verdichtetes Graphitexpandat.

Bevorzugt liegt die Dichte des Graphitexpandatformlings zwischen 0,05 und 0,4 g/cm³, besonders bevorzugt zwischen 0,1 und 0,3 g/cm³. Bei diesen Dichten sind die genannten Eigenschaften der Wärmeleitfähigkeit, der Anpassungsfähigkeit und der Handhabbarkeit besonders vorteilhaft kombiniert.

Nach einer Ausführungsform des erfindungsgemäßen Wärmeableiters weist der Graphitexpandatformling in Dickenrichtung nach einem ersten Belastungszyklus bei 0,5 MPa eine Rückfederung von 0,5 % bis 20 %, insbesondere von 1 - 10 %, insbesondere von 4 - 10 %, bezogen auf seine Ausgangsdicke auf.

Der erfindungsgemäße Wärmeableiter hat eine so geringe Dichte, dass er bei einer ersten Komprimierung noch stärker komprimiert werden kann als in folgenden Belastungen. Dies liegt darin begründet, dass ein gewisser Anteil der ersten Komprimierung irreversibel ist. Die oben genannten Werte beziehen sich auf den Wärmeableiter bei Belastungen, die auf die erste Belastung folgen. Nach der ersten Komprimierung erhält der Wärmeableiter durch eine Ausrichtung des Graphitexpandats, ähnlich wie es herkömmlich durch Kalandrieren bei der Herstellung von Graphitfolie entsteht, eine erhöhte Wärmeleitfähigkeit.

Ganz besonders bevorzugt wird die erste Komprimierung bei einem Komprimierungsdruck durchgeführt, der niedriger ist als ein Komprimierungsdruck bei einer späteren Belastung. Dies ermöglicht eine Rückfederung des Wärmeableiters. Bei einem höheren Komprimierungsdruck bei der ersten Belastung als bei einem späteren Einsatz beispielsweise zwischen Pouchzellen besteht die Gefahr, dass durch einen zu hohen irreversiblen Anteil bei der ersten Komprimierung der Graphitexpandatformling nicht genügend zurückfedern kann und nicht an den Pouchzellen anliegt.

Vorteilhaft weist der Graphitexpandatformling ein Dicke zwischen 0,2 und 3 mm, bevorzugt zwischen 0,5 und 2 mm auf. Bei diesen Dicken lässt sich der Graphitexpandatformling besonders gut komprimieren. Bei größeren Dicken besteht die Gefahr, dass durch innere Reibungsverluste eine Komprimierung auf oberflächennahe Bereiche beschränkt bliebe.

Entsprechend liegt eine vorteilhafte Dicke nach einem ersten Belastungszyklus bei 0,5 MPa zwischen 0,2 und 2 mm, insbesondere zwischen 0,5 und 2 mm. Erfindungsgemäß besitzt der Graphitexpandatformling zwei Hauptflächen, wobei auf zumindest einer Hauptfläche eine Kunststoffschicht angeordnet ist. Das Flachmaterial umfasst in diesem Fall einen Mehrlagenaufbau aus Graphitexpandatformling und zumindest einer Kunststoffschicht.

Die Handhabbarkeit des Graphitexpandatformlings wird durch einen mechanischen Verstärkungseffekt der Kunststoffschicht stark erhöht. Zusätzlich wirkt die Kunststoffschicht senkrecht zur Ebene des Flachmaterials als elektrischer Isolator, was eine elektrische Isolierung einzelner Batteriezellen voneinander ermöglicht. Dagegen bleiben die Vorteile des erfindungsgemäßen Wärmeableiter weitgehend erhalten bleiben. So bleiben die Atmungseigenschaften des Graphitexpandatformlings selbst erhalten und die Wärmeleitfähigkeit in Flächenrichtung wird durch die Kunststoffschicht nicht beeinflusst. Da bevorzugt dünne Kunststoffschichten vorgesehen sind, ist eine Wärmeeinkopplung in die mit einer Kunststoffschicht versehenen Hauptflächen des Graphitexpandatformlings nur gering beeinflusst.

Bevorzugt beträgt der spezifische elektrische Widerstand des Wärmeableiters durch die Kunststoffschicht senkrecht zur Ebene des Flachmaterials mindestens 12.000 mΩcm². Dieser Wert bezieht sich auf eine Widerstandsmessung mit Messsonden eines Durchmessers von 25 mm bei 12 V und 1 A/cm².

Nach einer nicht erfindungsgemäßen Ausführungsform ist die Kunststoffschicht durchgehend ausgebildet, das heißt die Kunststoffschicht ist vollflächig ausgebildet. Dadurch ist eine besonders gute mechanische Verstärkung gegeben. Desweiteren liegt eine besonders gute elektrische Isolierung senkrecht zur Fläche des Graphitexpandatformlings vor. Dadurch können Batteriezellen voneinander besonders gut elektrisch isoliert werden. Erfindungsgemäß ist die Kunststoffschicht durchbrochen ausgebildet. Dies verringert das Gewicht des Flachmaterials, wobei dessen mechanische Verstärkung trotzdem gegeben ist. Auch ist die Wärmeeinkopplung in die Hauptflächen hierdurch weiter verbessert.

Die durchbrochene Struktur weist erfindungsgemäß eine Lochstruktur, eine Streifen- und/oder eine Mäanderstruktur auf.

Die Struktur kann je nach gewünschten mechanischen Eigenschaften ausgebildet sein. Mit Streifen- und/oder Mäanderstrukturen können gezielt Richtungsabhängigkeiten der mechanischen Eigenschaften eingestellt werden. So ist senkrecht zu einer lamellenartigen Struktur eine Stauchbarkeit gegeben, die parallel dazu nicht vorliegt. Eine Lochstruktur gewährleistet dagegen mechanische Eigenschaften, die in allen Richtungen innerhalb der Fläche gleich sind.

Nach einer Variante der Erfindung ist auf beiden Hauptflächen des Graphitexpandatformlings eine Kunststoffschicht vorgesehen. Dies kann vorteilhaft die mechanischen Eigenschaften weiter verbessern, ohne die Atmungseigenschaften wesentlich zu beeinflussen. Die Komprimierbarkeit und Rückfederung des Graphitexpandatformlings selbst hängen nicht von der Kunststoffschicht ab. Zusätzlich sind die elektrischen Isolationseigenschaften weiter verbessert.

Nach einer weiteren Variante sind die Kunststoffschicht auf der ersten Hauptfläche und die Kunststoffschicht auf der zweiten Hauptfläche unterschiedlich ausgebildet. Dies kann vorteilhaft sein, um mit zwei verschiedenen Kunststoffschichten jeweils unterschiedliche Vorteile zu erzielen. So kann mit einer ersten Kunststoffschicht auf der ersten Hauptfläche eine elektrische Isolierung gewährleistet sein, wozu nur eine geringe Dicke nötig ist. Eine zweite Kunststoffschicht auf der zweiten Hauptfläche hingegen kann eine andere Aufgabe übernehmen, wie etwa eine mechanische Verstärkung. Somit sind keine Kunststoffe bzw. Kunststoffschichten nötig, die alle gewünschten Eigenschaften besitzen, sondern es können beliebig Eigenschaften kombiniert werden.

Vorteilhafterweise enthält zumindest eine Kunststoffschicht zumindest einen der Kunststoffe aus der Gruppe umfassend Polyethylenterephtalat (PET), Polyolefine, wie Polyethylen (PE) und Polypropylen (PP), Polyimide (PI), Fluorkunststoffe, wie etwa PVDF oder PTFE, Polyvinylchlorid (PVC), Polystyrol (PS), Polyester, Polycarbonat und Biopolymere, wie etwa Polylactid (PLA), Celluloseacetet (CA) und Stärkeblends, oder einer Mischung daraus gebildet. Als PET wird insbesondere biaxial orientierter Polyester bevorzugt, der auch unter dem Handelsnamen Mylar® bekannt ist. Als Mischung wird im Rahmen der Erfindung eine chemische Mischung, wie sie etwa bei Blockpolymeren vorliegt, oder eine physikalische Mischung aus nebeneinander vorliegenden, d.h. chemisch nicht verbundenen, Polymeren, bezeichnet.

Nach einer vorteilhaften Variante der Erfindung ist die Kunststoffschicht eine Kunststofffolie, die mit dem Graphitexpandatformling verbunden ist. Dies hat den Vorteil, dass Kunststoffschicht und Graphitexpandatformling getrennt voneinander hergestellt bzw. bereitgestellt werden können und nach Wunsch oder Bedarf vorteilhaft miteinander kombiniert werden können.

Vorteilhafterweise liegt die Dicke der Kunststofffolie 5 und 100 µm, bevorzugt zwischen 8 und 90 µm, besonders bevorzugt zwischen 10 und 75 µm.

Nach einer ersten Variante sind Graphitexpandatformling und Kunststofffolie mittels eines Klebstoffs miteinander verbunden. Diese Variante hat den Vorteil, dass weitgehend unabhängig von den Eigenschaften der Kunststofffolie eine mechanisch stabile Verbindung zwischen Graphitexpandatformling und Kunststofffolie erzeugt werden kann.

Als Klebstoffe kommt bevorzugt ein Klebstoff aus der Gruppe bestehend aus Acrylaten, Polysiloxanen, Polyurethanen, Polyamiden, Acetaten und Epoxidharzen in Frage.

Nach einer zweiten Variante sind Graphitexpandatformling und Kunststofffolie kleberfrei miteinander verbunden. Dies kann beispielsweise durch teilweises Aufschmelzen oder Aufsintern der Kunststofffolie auf den Graphitexpandatformling erfolgen. Diese Variante hat den Vorteil, dass sich die Eigenschaften des Flachmaterials gezielt durch die Eigenschaften des Graphitexpandatformlings und der Kunststoffschicht einstellen lassen, ohne dass eine Klebstoffschicht die gewünschten Eigenschaften beeinflusst.

Nach einer weiteren Variante der Erfindung weist der Graphitexpandatformling selbst einen weiteren Kunststoff auf. Dies kann vorteilhaft zu einer mechanischen Verstärkung des Graphitexpandatformlings führen. Da ein vorliegendes zusammenhängendes Netzwerk aus Graphit im Graphitexpandatformling durch den weiteren Kunststoff nicht gestört wird, ändert sich dessen Wärmeleitfähigkeit nicht.

Vorteilhafterweise enthält, insbesondere ist, der weitere Kunststoff zumindest einen der Kunststoffe aus der Gruppe umfassend Polyethylenterephtalat (PET), Polyolefine, wie Polyethylen (PE) und Polypropylen (PP), Polyimide (PI), Fluorkunststoffe, wie etwa PVDF oder PTFE, Polyvinylchlorid (PVC), Polystyrol (PS), Polyester, Polycarbonat und Biopolymere, wie etwa Polylactid (PLA), Celluloseacetet (CA) und Stärkeblends, oder einer Mischung daraus. Als Mischung wird im Rahmen der Erfindung eine chemische Mischung, wie sie etwa bei Blockpolymeren vorliegt, oder eine physikalische Mischung aus nebeneinander vorliegenden, d.h. chemisch nicht verbundenen, Polymeren, bezeichnet.

In einer Ausführungsform ist bereits bei der Herstellung des Graphitexpandatformlings der weitere Kunststoff in den Graphitexpandatformling eingebracht. Dies kann durch ein vor der Verdichtung gebildetes Gemisch aus weitgehend gleichmäßig vermischten Graphitexpandatflocken und Kunststoffpartikeln erfolgen.

In einer alternativen Ausführungsform wird der Graphitexpandatformling nachträglich mit Kunststoff versehen. Dies kann vorteilhaft durch Infiltration mit einer flüssigen Vorstufe, wie einem Harz, oder einem aufgeschmolzenen Kunststoff, wie einem Thermoplast, durchgeführt werden. Dieses Imprägnieren, wobei dieser Begriff die beiden vorgenannten Verfahren umfasst, kann oberflächlich oder bis in einen Kernbereich des Graphitexpandatformlings erfolgen.

Bei diesen Ausführungsformen mit weiterem Kunststoff kann der irreversible Verformungsanteil bei der ersten Komprimierung geringer sein als bei einem Graphitexpandatformling ohne Imprägnierung. Dies hängt auch davon ab, wie tief eine oberflächliche Imprägnierung in das Flachmaterial eindringt, ob eine oder beide Hauptflächen imprägniert sind und welcher Volumenanteil des Flachmaterials mit Kunststoff imprägniert ist. Eine somit vorliegende geringere Atmungsfähigkeit steht in dieser Ausführungsform einer höheren mechanischen Festigkeit gegenüber. Ein Wärmeableiter gemäß der vorliegenden Erfindung kann je nachdem, welches Eigenschaftsprofil bei einem Einsatz gewünscht ist, mit höherer Anpassungsfähigkeit oder höherer mechanischer Festigkeit gewählt werden.

Nach einer Ausführungsform des erfindungsgemäßen Wärmeableiters ist die kleberfreie Verbindung durch Schmelzverbinden des Kunststoffs aus dem Graphitexpandatformling mit dem Kunststoff der Kunststofffolie hergestellt. Hierbei sind Graphitexpandatformling und Kunststofffolie dadurch verbunden, dass Graphitexpandatformling und Kunststofffolie mit einer ihrer Hauptflächen in Kontakt zueinander angeordnet sind, und durch Temperaturen kurz unterhalb des Schmelzpunktes versintert oder bei oder oberhalb des Schmelzpunktes zumindest eines der Kunststoffe durch Aufschmelzen verbunden werden. Ein Erzielen einer mechanisch stabilen Verbindung wird durch Anlegen von Druck, wie etwa in einer Presse oder kontinuierlich durch Walzen, wie etwa Kalandrierwalzen, unterstützt.

Nach einer vorteilhaften Variante ist der Kunststoff des Graphitexpandatformlings derselbe wie der Kunststofffolie. Dies unterstützt vorteilhaft ein Schmelzverbinden von Graphitexpandatformling und Kunststofffolie. Dies kann auch bei chemisch ähnlichen Kunststoffen, wie PE und PP oder ähnlichen Kombinationen vorteilhaft der Fall sein. Welche Kunststoffe durch Sintern oder Aufschmelzen miteinander verbunden werden können, ist dem Fachmann bekannt oder kann durch einfache Versuche herausgefunden werden und wird daher hier nicht detailliert dargestellt.

Nach einer weiteren vorteilhaften Variante der Erfindung enthält der Graphitexpandatformling Phasenwechselmaterial, kurz PCM (phase change material). PCM kann durch Durchlaufen eines Phasenübergangs latente Wärme speichern und abgeben. Dies kann beim Einsatz des erfindungsgemäßen Wärmeableiters von Vorteil sein, um eine Überhitzung oder Hot-spots in einer Batterie zu verhindern.

Vorteilhaft durchläuft das PCM im Temperaturbereich der Anwendung in einer Batterie einen Fest-Fest-Phasenübergang. Das heißt, das PCM schmilzt nicht auf, sondern kann Wärme durch Änderung beispielsweise des Kristallinitätszustands speichern und abgeben. Vorteilhafte PCMs sind die schon genannten Polyethylen (PE) und Polypropylen (PP), wobei HDPE (high density PE) besonders bevorzugt ist, sowie Copolymere aus PE und PP. Ebenso möglich sind PCM-Materialien, bei denen die aktive PCM-Komponente (z.B. Paraffine oder Salz-Hydrate) an eine TrägerMatrix (zum Beispiel SiO₂ oder Silicate) gebunden sind , was auch bedeuten kann, dass sie in einer Netzstruktur bzw. Kanälen dieser Träger eingebracht sind. Auch im Phasenübergang Fest-Flüssig bleibt diese Haftung bestehen bzw. bleibt das flüssige PCM in dem Träger eingefangen, wodurch die Gesamtkomponente ebenso als formstabil zu bezeichnen ist und als trockener Feststoff behandelt werden kann. Diese Materialien lassen sich bevorzugt wie weiter oben beschrieben durch Vermischen von PCM-Partikeln mit dem Graphitexpandat, mit dem der erfindungsgemäße Graphitexpandatformling hergestellt wird, oder durch Schmelzimprägnieren in das bereits hergestellte Flachmaterial einbringen.

Nach einer Alternative der Erfindung liegt das PCM gekapselt vor. Die Kapseln Umhüllen das PCM, so dass es aufschmelzen kann, ohne aus dem Flachmaterial auszufließen. Daher können PCMs mit einem Flüssig-Fest-Phasenübergang im Anwendungstemperaturbereich zum Einsatz kommen. Bevorzugtes PCM sind Paraffine oder Salzhydrat, wie sie zum Beispiele Micronal von BASF, oder weitere Materialien von Capzo oder Rubitherm. Bevorzugt liegt die Kapselgröße zwischen 1 und 1000 µm.

Der Anteil des PCM im Flachmaterial beträgt vorzugsweise 10 bis 50 Gew.-% bezogen auf das Gewicht des Graphits.

Nach einer weiteren Ausführungsform des erfindungsgemäßen Wärmeableiters ist eine Kunststoffschicht auf zumindest einer Hauptfläche des Graphitexpandatformlings dadurch angeordnet, dass die Hauptfläche mit Kunststoff imprägniert ist. Dies kann beispielsweise durch ein oberflächliches Benetzen mit einem Harz oder einem geschmolzenen Kunststoff erfolgen. Der durch Vernetzen oder Erstarren sich verfestigende Kunststoff bildet auf der Hauptfläche eine Schicht aus, die in einem oberflächlichen Bereich in den Graphitexpandatformling reicht.
Bevorzugt ist diese Kunststoffschicht in demselben Schritt ausgebildet, in dem der weitere Kunststoff, der in diesem Fall mit dem Kunststoff der Kunststoffschicht identisch ist, in den Graphitexpandatformling eingebracht ist.

In einer weiteren Ausführung der Erfindung weist das Flachmaterial eine Wärmeleitfähigkeit in Flächenrichtung von 3 bis 50 W/(m K), bevorzugt von 5 bis 40 W/(m K) und besonders bevorzugt von 10 bis 30 W/(m K) auf. Diese Werte beziehen sich auf das Flachmaterial nach einer ersten Komprimierung bei 0,5 MPa.

In einer Ausführung der Erfindung weist das Flachmaterial in Dickenrichtung eine Rückfederung von 0,5-20%, bevorzugt von 1-10% und besonders bevorzugt von 4-10%, bezogen auf seine Ausgangsdicke, auf, wodurch sich der Wärmeableiter bei einer Volumenverringerung der Batteriezellen in den freiwerdenden Raum ausbreiten kann. Unter Ausgangsdicke ist hierbei die Dicke des Flachmaterials ohne äußeren Flächendruck zu verstehen, also im nicht komprimierten oder verspannten Zustand vor der Montage des Energiespeichers. Hierdurch kann eine gut wärmeleitende, dauerhafte Verbindung zwischen Batteriezellen und Wärmeableiter sichergestellt werden.

Der erfindungsgemäße Wärmeableiter hat eine so geringe Dichte, dass er vor der ersten Batteriefahrt, also vor der ersten Volumenausdehnung der Batteriezellen, noch stärker komprimiert werden kann als in den folgenden Zyklen. Dabei ist ein gewisser Anteil der ersten Komprimierung irreversibel.

In noch einer weiteren Ausführung der Erfindung weist das Flachmaterial in Dickenrichtung eine Kompressibilität von 1-50%, bevorzugt von 5-35%, besonders bevorzugt von 7-30% und ganz besonders bevorzugt von 10-20%, bezogen auf seine Ausgangsdicke, auf, wodurch der Wärmeableiter bei einer Volumenausdehnung der Batteriezellen nachgeben kann. Hier beziehen sich die Werte auf den Wärmeableiter vor einem ersten Belastungszyklus, also in einem Ausgangszustand. Durch diese gute Kompressibilität kann sich der Wärmeableiter besonders gut an geometrische Gegebenheiten, wie etwa Bearbeitungsungenauigkeit, Kanten oder Rauhigkeiten in einem Batteriegehäuse anpassen.

Weist das Flachmaterial vorteilhaft zumindest an einer zur Verbindung mit einem Kühlmodul vorgesehen Stirnseite eine Metallbeschichtung auf, so kann der Wärmeableiter angelötet werden. Des Weiteren kann zumindest ein Teilbereich zumindest einer Hauptfläche des Flachmaterials mit einer Metallbeschichtung versehen sein. Dies ist beispielsweise bei vollflächig mit einer Metallbeschichtung versehenem Flachmaterial der Fall.

Weist der Graphitexpandatformling eine Kunststoffschicht auf, kann die Metallbeschichtung auf der Kunststoffschicht vorgesehen sein. Es sind aber alle Kombinationen der Kunststoff- und Metallschichten möglich. So kann auf der ersten Hauptfläche des Graphitexpandatformlings eine Kunststoffschicht vorgesehen sein und auf der zweiten Hauptfläche eine Metallbeschichtung. Auch können beide Hauptflächen sowohl eine Kunststoffschicht als auch eine Metallbeschichtung aufweisen.

In einer bevorzugten Ausführung kann das Flachmaterial trogförmig mit offenen oder geschlossenen kurzen Seiten geformt sein, so dass einerseits eine gut wärmeleitende, großflächige Verbindung mit einem Kühlmodul eines Energiespeichers und andererseits eine leichte Handhabbarkeit des Wärmeableiters und Einstellbarkeit von Batteriezellen in den Wärmeableiter ermöglicht werden. In einer alternativen Ausführung kann das Flachmaterial wellen- oder mäanderförmig, wabenähnlich oder in Form einer Acht geformt sein, wodurch eine gute, großflächige Anlage an die Batteriezellen bei gleichzeitig schneller Montage des Wärmeableiters im Energiespeicher ermöglicht wird.

Bevorzugt kann der oder die Wärmeableiter des Energiespeichers wie oben und nachfolgend beschrieben ausgebildet sein. Um einen guten Wärmeübergang zwischen einer Batteriezelle zu ermöglichen, kann diese vorteilhaft von einem an ihre Außenkontur angepassten Wärmeableiter umgeben sein. Beispielsweise können der oder die Wärmeableiter bei quaderförmigen Batteriezellen trogförmig, bei im Querschnitt sechseckigen Batteriezellen wabenförmig, bei runden Batteriezellen wellenförmig oder in Form einer 8 geformt sein, um eine gute, möglichst großflächige Anschmiegung des oder der Wärmeableiter an die Außenflächen der Batteriezellen zu ermöglichen. In einer Ausführung der Erfindung kann der Energiespeicher mehrere, im Wesentlichen quaderförmige Batteriezellen enthalten, wobei das Flachmaterial des oder der Wärmeableiter zwischen benachbarten Außenflächen zumindest einiger benachbarter Batteriezellen angeordnet ist.

In einer weiteren Ausführung können Stirnseiten und oder Teilflächen des Flachmaterials des oder der Wärmeableiter mit einem Kühlmodul des Energiespeichers wärmeleitend verbunden sein, wodurch auf vorteilhafte Weise von den Batteriezellen in die Wärmeleiter eingetragene Wärme aus dem Energiespeicher abgeführt werden kann. Vorteilhaft kann der Boden oder ein Teil des Bodens des Energiespeichers aus dem Kühlmodul gebildet sein, wodurch die Anbindung der Wärmeableiter an das Kühlmodul einfach ermöglicht wird. In einer für einen möglichst großen Wärmeübergang vorteilhaften Ausführung sind der oder die trogförmige Wärmeableiter mit ihren Trogböden mit dem Bodenteil respektive Kühlmodul wärmeleitend verbunden. Auch können vorteilhaft Innenwände eines Gehäuses des Energiespeichers mit dem erfindungsgemäßen Flachmaterial ausgekleidet sein, das bündig mit entsprechenden Seitenflächen der Batteriezellen kontaktiert, um eine zusätzliche Wärmeableitung vorzusehen.

Vorteilhaft kann der Boden einer durch die einander zugewandten Seitenflächen der Wärmeableiter gebildeten mittleren Tasche auch mit einem Wärmeableiter versehen sein, um eine schnelle Wärmeverteilung und -ableitung von Wärmeenergie auch auf der unteren Stirnseite der mittleren Batteriezelle bereitzustellen. Ebenso kann vorteilhafterweise in einer Ausführung ein Boden zwischen Wärmeableitern zur besseren Anpassung der Batteriezelle an das Kühlmodul und zur besseren Wärmeabfuhr mit passenden Streifen aus Wärmeableiter oder durchgängig mit einem Wärmeableiter versehen werden.

Vorteilhaft kann das Flachmaterial des oder der Wärmeableiter zur sicheren wärmeleitenden Verbindung des Flachmaterials an den Batteriezellen so ausgebildet sein, dass es sich bei einer Volumenverringerung der Batteriezellen ausdehnt und bei einer Volumenausdehnung der Batteriezellen nachgibt. Um die erst im Betrieb der Batteriezellen auftretende Volumenausdehnung zu ermöglichen, können die Wärmeableiter und die Batteriezellen im betriebslosen Zustand des Energiespeichers vorteilhaft so miteinander verspannt werden, das das Flachmaterial des oder der Wärmeableiter in Dickenrichtung nur schwach, bevorzugt um höchstens 1% bezogen auf seine Ausgangsdicke, komprimiert ist. Dieser Wert bezieht sich auf den Wärmeableiter nach Durchfahren eines ersten Belastungszyklus, bei dem er zum ersten Mal im Betrieb komprimiert wird. Dabei wird ein Belastungsdruck von 0,5 MPa angenommen.

Der Belastungsdruck setzt sich vorteilhaft aus dem Druck, der durch ein Ausdehnen zweier benachbarter Pouchzellen entsteht, zwischen denen der Wärmeableiter angeordnet ist, und einem zusätzlich durch Verspannen der Pouchzellen von außen angelegten Verspannungsdruck zusammen. Durch geeignete niedrige Einstellung des Verspannungsdrucks wird vorteilhaft erzielt, dass durch Atmen der Zellen kein höherer Belastungsdruck als 0,5 MPa auf den Wärmeableiter wirkt. Dies hat vorteilhaft zur Folge, dass der erfindungsgemäße Wärmeableiter beim späteren Betrieb der Batterie bei Drücken von 0,5 MPa seine reversiblen Atmungseigenschaften behält.

Vorteilhaft können oben und nachfolgend beschriebene erfindungsgemäße Wärmeableiter in elektrischen Energiespeichern mit Lithium-Ionen-Batteriezellen verwendet werden, wobei durch die Verwendung der kompressiblen und rückfedernden Wärmeableiter eine federnde, mechanische Vorspannungsvorrichtung zum Verspannen der Batteriezellen im Energiespeicher nicht mehr notwendig ist.

Weitere Besonderheiten und Vorzüge der Erfindung ergeben sich aus der folgenden Beschreibung von bevorzugten Ausführungsbeispielen anhand der Zeichnungen. Es zeigen:
- **Fig. 1**: eine schematische dreidimensionale Ansicht eines erfindungsgemäßen elektrischen Energiespeichers;
- **Fig. 2**: einen Längsschnitt durch eine zweite erfindungsgemäße Ausführung des Energiespeichers;
- **Fig. 3**: einen Längsschnitt durch eine dritte erfindungsgemäße Ausführung des Energiespeichers;
- **Fig. 4**: eine Draufsicht auf eine vierte erfindungsgemäße Ausführung des Energiespeichers;
- **Fig. 5**: eine Draufsicht auf eine fünfte erfindungsgemäße Ausführung des Energiespeichers;
- **Fig. 6**: eine Draufsicht auf eine sechste erfindungsgemäße Ausführung des Energiespeichers;
- **Fig. 7**: einen Querschnitt durch verschiedene erfindungsgemäße Ausführungen von Wärmeableitern.
- **Fig. 8**: ein Diagramm, das das Kompressions- und Rückfederungsverhalten eines erfindungsgemäßen Wärmeableiters mit Graphitexpandatformling ohne Kunststoffschicht mit Dicke 2 mm und Dichte 0,3 g/cm³ mit Zyklenzahl 40 zeigt;
- **Fig. 9**: ein Diagramm, das das Kompressions- und Rückfederungsverhalten eines erfindungsgemäßen Wärmeableiters mit Graphitexpandatformling ohne Kunststoffschicht mit Dicke 2 mm und Dichte 0,3 g/cm³ mit Zyklenzahl 200 zeigt und
- **Fig. 10**: ein Diagramm, welches das Kompressions- und Rückfederungsverhalten eines erfindungsgemäßen Wärmeableiters mit Graphitexpandatformling ohne Kunststoffschicht mit Dicke 1 mm und Dichte 0,15 g/cm³ bei Belastungsdrücken von 0,1 bis 0,5 MPa zeigt.

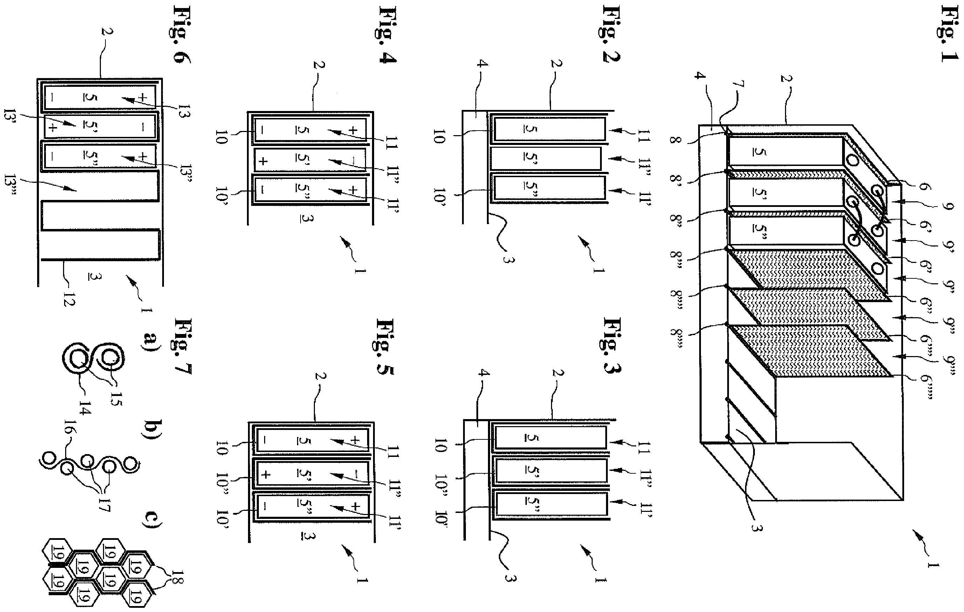

Ein in Fig. 1 in teilsweise aufgebrochener, schematischer dreidimensionaler Darstellung gezeigter elektrischer Energiespeicher 1 weist ein im Wesentlichen kastenförmiges Gehäuse 2 mit einem Gehäuseboden 3 auf. Der Gehäuseboden wird durch ein in Fig. 1 schematisch dargestelltes Kühlmodul 4 gebildet, das ein aktives oder passives Kühlmodul sein kann und aus einem Material mit guter thermischer Leitfähigkeit und möglichst guter Wärmespeicherkapazität besteht, z.B. Aluminium. Das Kühlmodul 4 kann vorzugsweise (in Fig. 1 nicht dargestellte) Kühlrippen und/oder Kanäle zur Durchleitung eines Kühlmediums, beispielsweise Wasser, aufweisen. Das Gehäuse 2 ist vollständig mit Lithium-Ionen-Batteriezellen bestückt, wobei in Fig. 1 aus Gründen der besseren Darstellbarkeit nur drei Batteriezellen 5, 5', 5" gezeigt sind.

Zwischen in Fig. 1 linker Seitenwand des Gehäuses 2 und der benachbarten Batteriezelle 5 sowie zwischen den benachbarten Batteriezellen 5 und 5' bzw. 5' und 5" sind erfindungsgemäß Wärmeableiter 6 bzw. 6' und 6" eingefügt. Weiter sind in Fig. 1 Wärmeableiter 6"', 6"" und 6'"" gezeigt; weitere Wärmeableiter sind aus Gründen der besseren Darstellbarkeit nicht gezeichnet.

Die Wärmeableiter 6 bis 6'"" bestehen aus einem Flachmaterial aus verfestigtem, expandiertem Graphit, sogenanntem Graphitexpandat. Die Herstellung von Graphitexpandat ist hinlänglich bekannt, beispielsweise aus der US 3,404,061 A oder DE 103 41 255 B4. Zur Herstellung von expandiertem Graphit werden Graphiteinlagerungsverbindungen bzw. Graphitsalze wie z.B. Graphithydrogensulfat schockartig erhitzt. Dabei vergrößert sich das Volumen der Graphitpartikel um einen Faktor von ca. 200 - 400 und gleichzeitig sinkt die Schüttdichte auf Werte von 2 - 20 g/l. Das so erhaltene Graphitexpandat besteht aus wurm- bzw. ziehharmonikaförmigen Aggregaten. Anschließend wird das Graphitexpandat unter gerichteter Einwirkung eines Drucks verdichtet, so dass sich die Schichtebenen des Graphits bevorzugt senkrecht zur Einwirkungsrichtung des Drucks anordnen und sich die einzelnen Aggregate untereinander verhaken. Hierdurch wir ein erfindungsgemäßes Flachmaterial erhalten, welches u. a. in Form gepresst werden kann und zur Handhabung ausreichend stabil und formtreu ist. Ein für die vorliegende Verwendung geeignetes Flachmaterial wird durch die Verdichtung von Graphitexpandat unter so geringem Druck erhalten, dass ein Graphitexpandatformling erhalten wird, der bei einer Dicke von 2 mm eine Dichte von 0,3 g/cm³ aufweist. Dies erfolgt kontinuierlich mit Hilfe von Kalandrierwalzen.

In einem alternativen Ausführungsbeispiel wird ein Graphitexpandatformling mit einer Dicke von 1 mm und einer Dichte von 0,15 g/cm³ hergestellt. Dies erfolgt durch Einbringen von Graphitexpandat in ein Rohr mit 49 mm Durchmesser, in das ein Handstempel eingefahren wird, mit dem das Graphitexpandat komprimiert wird.

Um die Atmungseigenschaften der Graphitexpandatformlinge zu untersuchen, wurden deren Kompressions- und das Rückfederungsverhalten gemessen.

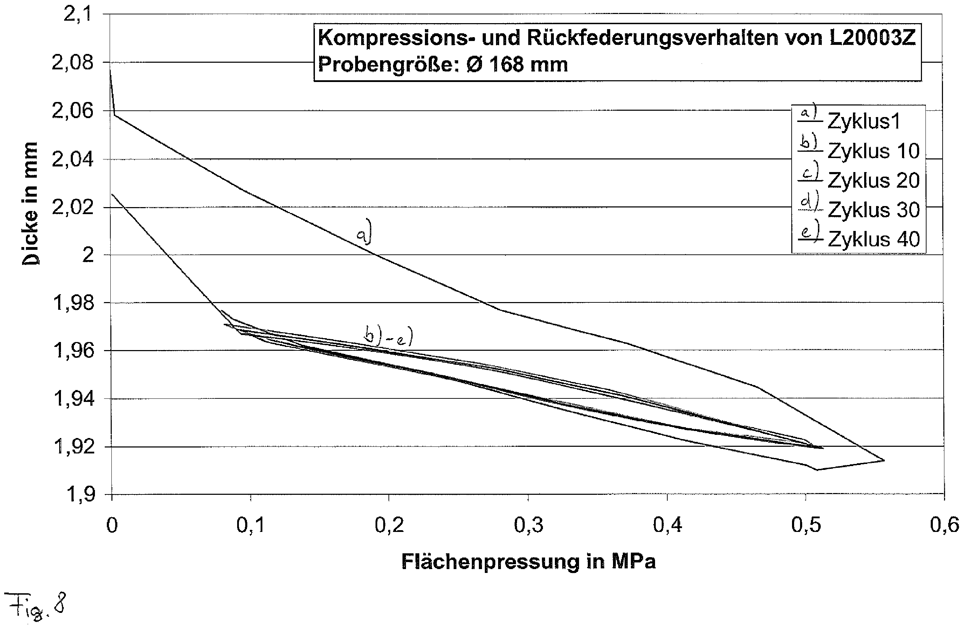

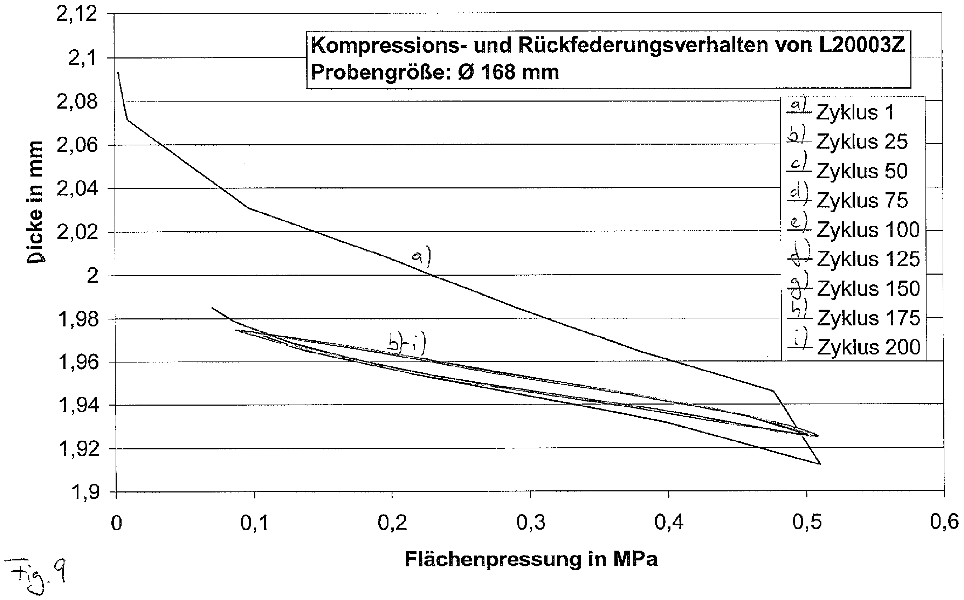

Dazu wurden Proben einer Geometrie von 49 mm Durchmesser und einer Probendicke von 2 mm von den großflächigen Graphitexpandformlingen der Dichte 0,3 g/cm³ durch Stanzen genommen und mit einer Messapparatur Temes (fl ai1) der Fa. Amtec die Dickenveränderung in Abhängigkeit der Flächenpressung bestimmt. Die Ergebnisse sind in den Figuren 8 und 9 dargestellt. Der Bereich a) der Diagramme zeigt die Anfahrkurve als das Kompressionsverhalten beim erstmaligen Belasten des Graphitexpandatformlings mit einer Flächenpressung.

Die Bereiche b) bis e) in Fig. 8 stellen die Dicke des Graphitexpandatformlings in Kompression bzw. in Rückfederung in Abhängigkeit der Flächenpressung in der 10., 20., 30. und 40. bzw. Entlastung nach der Anfahrkurve dar. In Fig. 9 stellen die Kurven b) bis i) die Dicke des Graphitexpandatformlings in Kompression bzw. in Rückfederung in Abhängigkeit der Flächenpressung in der 25., 50., 75., 100., 125., 150., 175. und 200. Belastung bzw. Entlastung nach der Anfahrkurve dar. Aus allen gemessenen Kurven zeigt sich, dass die Kompression, die während der Anfahrkurve ausgeübt wird, irreversibel ist. In den folgenden Kurven ist der irreversible Anteil deutlich geringer und verschwindet schließlich ganz. Die einzelnen Kurven sind kaum voneinander unterscheidbar, was die sehr hohe Reversibilität der Kompression und Rückfederung des erfindungsgemäßen Wärmeableiters zeigt.

Bei einer 40-fachen Zyklisierung, die in Fig. 8 dargestellt ist, zeigt sich, dass sich bereits zwischen dem 10. und 20. Zyklus kaum mehr Veränderungen im Kompressions- und Rückfederverhalten auftreten.

Bei einer 200-fachen Zyklisierung, die in Fig. 9 dargestellt ist, zeigt sich, dass die Graphitexpandatformlinge der erfindungsgemäßen Wärmeableiter nach dem 25. Zyklus ein gleich bleibendes Kompressions- und Rückfederungsverhalten aufweisen.

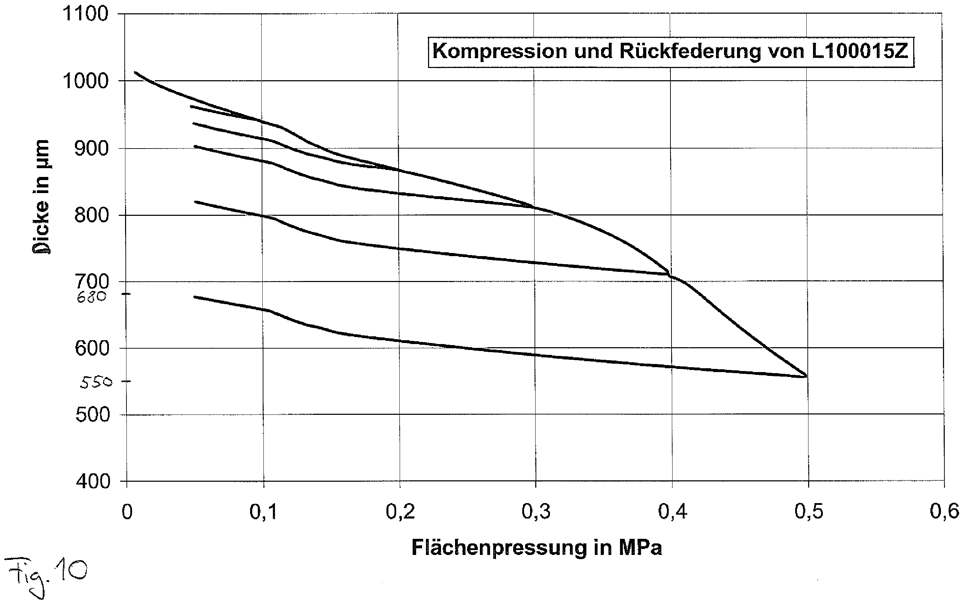

Die Graphitexpandatformlinge der Dichte 0,15 g/cm³ lagen bereits durch ihre Herstellungsmethode mit dem Durchmesser 49 mm vor und wurden einer Dickenmessung in Abhängigkeit der Flächenpressung unterworfen wie für die erste Alternative des Ausführungbeispiels beschrieben. Anstelle einer Zyklisierung bei gleichem Enddruck wurden jedoch mehrere Belastungskurven mit steigender Belastung gefahren, die in Fig. 10 dargestellt sind, wobei zunächst ein Druck von 0,1 MPa angelegt wurde, wonach die Probe wieder auf einen Anfangsdruck von 0,05 MPa entlastet wurde. Darauf folgten Belastungen von 0,2 bis 0,5 MPa in Stufen von jeweils 0,1 MPa. Aus der Differenz der Ausgangsdicke der Probe und ihrer Dicke nach der jeweiligen Entlastung, sowie der Differenz der Dicke der Probe während der maximalen Belastung und ihrer Dicke nach der jeweiligen Entlastung kann das Komprimierungs- und Rückfederungsverhalten beurteilt werden. Zu sehen ist bei allen Drücken zum einen, dass die Dicke nach der Belastung stets geringer ist als die Ausgangsdicke. Dies zeigt zum einen das gute irreversible Anpassungsverhalten des Wärmeableiters an Unebenheiten. Zum anderen wird durch diesen ersten irreversiblen Anteil die Komprimierung des Graphitexpandatformlings durchgeführt, die die für den Einsatz als Wärmeableiter vorteilhafte Wärmeleitfähigkeit erzeugt. Ein Vergleich der Probendicke bei maximaler Komprimierung mit der Dicke nach Entlastung zeigt das sehr gute reversible Rückfederungsverhalten des Wärmeableiters. So federt der bei 0,5 MPa auf ca. 550 µm komprimierte Graphitexpandatformling bei Entlastung auf ca. 680 µm zurück, was bezogen auf die Ausgangsdicke von 1000 µm ein reversibles Rückfederungsverhalten von über 10 % bedeutet.

Die so beispielhaft getesteten Graphitexpandatformlingen werden anschließend mit Mylar-Folie durch Kleben verbunden. Geklebt wird durch flächiges Aufsprühen von Acrylatharzkleber auf die Mylar-Folie und anschließendes Kaschieren auf den Graphitexpandatformling. Der Graphitexpandatformling wird in diesem Ausführungsbeispiel auf seinen beiden Hauptflächen jeweils mit einer 12 µm dicken Mylar-Folie verbunden. Unter dem Markennamen Mylar® wird eine biaxial orientierte PET-Folie vertrieben.

Die Wärmeableiter 6 bis 6'"" respektive das Flachmaterial weisen gemäß dem ersten Ausführungsbeispiel bei einer Dichte von 0,3 g/cm³ während einer Komprimierung mit 0,5 MPa eine Wärmeleitfähigkeit in Flächenrichtung von 20 W/(m K) auf. Die Wärmeableiter 6 bis 6"'" lassen sich bei einer Belastung von 0,5 MPa, wie sie beim Betrieb von Lithium-Ionen-Batterien üblich ist, um 7 % in Dickenrichtung komprimieren. Weiter weisen diese Wärmeableiter 6 eine Rückfederung von 3 % bezogen auf ihre Ausgangsdicke in Dickenrichtung auf. Dies bedeutet am Beispiel des Wärmeableiters 6', dass dieser bei einer Volumenausdehnung von z.B. 3% der Batteriezellen 5 und 5' komprimiert wird.

Der Wärmeableiter 6 liegt also zwischen den Batteriezellen 5, 5' stets vollflächig an den Seitenflächen der Batteriezellen 5, 5' an, so dass stets ein guter Wärmeübergang sichergestellt ist. Dies wird dadurch unterstützt, dass die Verspannung der Batterie so hoch eingestellt ist, dass auch nach der ersten irreversiblen Kompression die verbleibende Verspannung groß genug ist, dass das Flachmaterial wärmeleitend an der Batteriezelle anliegt. Die anderen Wärmeableiter 6 bis 6'"" weisen entsprechende Eigenschaften auf und verhalten sich entsprechend.

Um die in die Wärmeableiter 6 eingetragene Wärmeenergie aus den Batteriezellen 5, 5', 5" schnell abtransportieren zu können, ist der Wärmeableiter 6 mit einer unteren Stirnseite 7 in eine Nut 8 im Kühlmodul 4 eingestellt und gut wärmeleitend mit diesem verbunden. Auch die anderen Wärmeableiter 6' bis 6'"" sind auf gleiche Weise gut wärmeleitend in Nuten 8' bis 8'"" mit dem Kühlmodul 4 verbunden. Vorzugsweise kann der Wärmeableiter 6 dort mit einem wärmeleitenden Kleber eingeklebt werden.

Enthält in einer vorteilhaften, nicht gezeichneten Ausführung der Wärmeableiter zumindest im Bereich seiner unteren Stirnseite oder auch eine vollflächige Metallbeschichtung, so kann er auch mit dem Kühlmodul 4 verlötet werden. Alternativ kann der Wärmeableiter 6 auch angeklebt oder angeschweißt werden.

In einer fertigungstechnisch vorteilhaften Ausführung sind die Wärmeableiter 6' bis 6'"" als formstabile und steife Folien oder Platten ausgebildet, was u. a. durch Verdichtung des Flachmaterials der Wärmeableiter 6' bis 6'"" mittels Druck oder auch durch nachträgliche Imprägnierung mit einem Kunststoff erreicht werden kann. Alternativ kann das Flachmaterial auch aus einem vor der Verdichtung gebildeten Gemisch aus weitgehend gleichmäßig vermischten Partikeln aus Graphitexpandat und Kunststoff bestehen, welche dann miteinander verpresst und ggf. erwärmt und somit zu einer steifen, formstabilen Folie bzw. Platte formbar sind. Somit kann bei der Fertigung des Energiespeichers zunächst der Boden 3 mit den Wärmeableitern 6' bis 6'"" bestückt werden, und anschließend werden die Batteriezellen 5, 5', 5" sowie die weiteren, in Fig. 1 nicht gezeigten Batteriezellen lediglich in durch die Wärmeableiter 6' bis 6'"" gebildeten Taschen 9' bis 9'"' eingesteckt. Da die Batteriezellen des Energiespeichers 1 miteinander verspannt werden, ist grundsätzlich keine Verklebung der Wärmeableiter mit den Batteriezellen notwendig, wodurch ein leichter Austausch einzelner oder aller Batteriezellen und ggf. der Wärmeableiter möglich ist.

Vorteilhaft werden die Wärmeableiter 6' bis 6'"" und Batteriezellen 5' bis 5" nur unter geringer Vorspannung bzw. Flächendruck in das Gehäuse 2 eingesetzt, um bei einer Volumenausdehnung der Batteriezellen 5' bis 5" trotz der kompressiblen Wärmeableiter 6' bis 6'"" im Betrieb keine zu hohen mechanischen Spannungen zu erzeugen. Insbesondere bei Lithium-Ionen-Batteriezellen können durch die erfindungsgemäßen Wärmeableiter zusätzliche Elemente, die eine Verspannung der Batteriezellen mit gleichzeitiger Ausdehnbarkeit ermöglichen, z.B. mit Federn versehene Spannmittel, vermieden werden.

Eine alternative Ausführung der Erfindung zeigt Fig. 2, welche sich im Wesentlichen durch die Ausformung und Anbringung der Wärmeableiter am Boden 3 des Energiespeichers 1 von der Ausführung nach Fig. 1 unterscheidet. Es werden deshalb gleiche Teile mit gleichen Bezugsziffern gekennzeichnet und im Wesentlichen auf die Unterschiede eingegangen.

Im Gegensatz zu der in Fig. 1 gezeigten Ausführung sind bei der in Fig. 2 gezeigten Ausführung Wärmeableiter 10, 10' als U- bzw. trogförmig geformtes Flachmaterial aus einem Graphitexpandatformling ausgebildet. Die trogförmigen Wärmeableiter 10, 10' sind hierbei mit ihren Trogböden auf dem Boden 3 befestigt, bevorzugt durch Verkleben. Enthält das Flachmaterial vorteilhaft einen Kunststoffanteil, zumindest im Bereich des Trogbodens der Wärmeableiter 10, 10', so können diese am Boden 3 angeschweißt werden, ggf. vorteilhaft auch nur stellenweise. Durch die Seitenflächen der Wärmeableiter 10 bzw. 10' bilden sich Taschen 11, 11' und 11", in die die Batteriezellen 5, 5' und 5" eingesteckt werden können. Der Abstand der Seitenflächen eines Wärmeableiters 10 bzw. 10' voneinander wie auch der Abstand von einander zugewandten Seitenflächen der benachbarten Wärmeableiter 10, 10' ist hierbei so groß gewählt, dass einerseits die Batteriezellen 5, 5' und 5" von oben eingesteckt werden können und andererseits die Seitenflächen der Wärmeableiter 10, 10' gut an den entsprechenden Seitenflächen der Batteriezellen 5, 5' und 5" anliegen.

In einer nicht in Fig. 2 gezeigten Ausführung kann der Boden 3 der durch die einander zugewandten Seitenflächen der Wärmeableiter 10, 10' gebildeten mittleren Tasche 11" auch mit einem Graphitexpandatformling versehen sein, um eine schnelle Wärmeverteilung und
-ableitung von Wärmeenergie auch auf der unteren Stirnseite der mittleren Batteriezelle 5' bereitzustellen. Ebenso kann vorteilhafterweise in einer nicht in Fig. 1 gezeigten Ausführung der Boden 3 zwischen den Wärmeableitern 6, 6", 6"' etc. zur besseren Anpassung der Batteriezelle an das Kühlmodul und zur besseren Wärmeabfuhr mit passenden Streifen aus einem Graphitexpandatformling oder einer durchgängigen Bodenbedeckung versehen werden.

Soll im Gegensatz zu dem in Fig. 2 gezeigten Ausführungsbeispiel eine noch schnellere und bessere Wärmeverteilung und Wärmeableitung ermöglich werden, wird, wie in Fig. 3 gezeigt, zwischen die Wärmeableiter 10 und 10' ein weiterer, entsprechend als trogförmiges Flachelement ausgebildeter Wärmeableiter 10'eingefügt, wobei der Abstand der Wärmeableiter 10 und 10' voneinander entsprechend vergrößert wird. Die Befestigung des Wärmeableiters 10" und die weitere Ausbildung des Energiespeichers 1 entspricht der oben zu Fig. 2 beschriebenen.

Die in Fig. 4 bzw. Fig. 5 gezeigten Ausführungen des erfindungsgemäßen Energiespeichers 1 entsprechen im Wesentlichen den in Fig. 2 bzw. Fig. 3 gezeigten Ausführungen, unterscheiden sich jedoch durch die Art der Anordnung und Befestigung der Wärmeableiter in dem Gehäuse 2. Es werden deshalb wieder gleiche Bezugszeichen für gleiche Teile verwendet wie in den vorangehenden Figuren 1 bis 3.

Bei der in Fig. 4 gezeigten Draufsicht auf einen elektrischen Energiespeicher 1 werden wieder aus trogförmigen Flachmaterial aus verdichtetem Graphitexpandat_bestehende Wärmeableiter 10, 10' verwendet. Diese werden jedoch nicht mit ihren Trogböden auf den Boden 3 gestellt, sondern mit seitlichen Stirnseiten einer Seite des Trogprofils. Die Stirnseiten werden dann wie oben beschrieben am Boden befestigt, wodurch eine gute Wärmeleitfähigkeit sichergestellt wird. In einer alternativen, in Fig. 4 nicht gezeigten Ausführung können am Boden Rinnen 7 vorgesehen werden, um einen sicheren Halt der Stirnseiten der Wärmeableiter 10, 10' zu gewährleisten und die wärmeleitende Verbindung zu verbessern.

Um wie auch bei dem in Fig. 3 gezeigten Ausführungsbeispiel eine noch schnellere und bessere Wärmeverteilung und Wärmeableitung zu ermöglichen, ist bei dem in Fig. 5 gezeigten Ausführungsbeispiel wieder ein weiterer Wärmeableiter 10" unmittelbar zwischen die Wärmeableiter 10 und 10' eingefügt. Ansonsten entspricht die Ausrichtung, Anordnung und Befestigung der Wärmeableiter 10, 10', 10'der in Fig. 4 gezeigten Ausführung.

Bei dem in Fig. 6 in Draufsicht dargestellten weiteren Ausführungsbeispiel der Erfindung wird anstatt einzelner, wie in Fig. 1 gezeigter plattenförmiger Wärmeableiter 6' bis 6"'" oder in Fig. 2 bis 5 gezeigte trogförmiger Wärmeableiter 10, 10', 10'ein einzelnen Wärmeableiter 12 aus einem mäanderförmigen Flachmaterial verwendet. Der Wärmeableiter 12 wird dabei von oben mit einer seiner seitlichen Stirnseiten in das Gehäuse 2 des Energiespeichers 1 eingesetzt, so dass sich wieder Taschen 13, 13', 13", 13" usw. für die Batteriezellen 5, 5', 5" sowie weitere, nicht gezeigte Batteriezellen bilden. Die Anbindung des Wärmeableiters 12 an den Boden 3 und somit an das Kühlmodul 4 erfolgt wie bei den in Fig. 1 bzw. 4 und 5 beschriebenen Ausführungen. Die in Fig. 6 gezeigte Ausführung weist zusätzlich den Vorteil einer sehr schnellen Montage auf, da die einzelnen Windungen des mäanderförmigen Wärmeableiters 12 bereits in dem gewünschten, an die Breite der Batteriezellen 5, 5', 5' angepassten Abstand voneinander vorgeformt werden können.

Fig. 7 zeigt weitere erfindungsgemäße Ausführungen eines Wärmeableiters. So zeigt Fig. 7a) einen Wärmeableiter 14 mit einem Querschnitt in Form einer 8. Hierdurch bilden sich zwei Taschen für zwei zylindrische oder rund ausgeführte Batteriezellen 15, wobei sich diese bündig an den Wärmeableiter 14 anschmiegen.

Fig. 7b) stellt einen Wärmeableiter 16 mit wellenförmigem Querschnitt dar, wobei in dessen Wellentäler beidseitig zylindrische Batteriezellen 17 angeordnet sind, welche sich an das Flachmaterial des Wärmeableiters 16 anschmiegen.

In Fig. 7c) sind eine Vielzahl von sechseckigen Batteriezellen 19 an im Querschnitt wabenähnlich geformten Wärmeableitern 18 so angeordnet, dass sich mehrere ihrer Seitenflächen an das Flachmaterial der Wärmeableiter 18 anschmiegen. Auch hier werden durch die Form der Wärmeableiter 18 Taschen zum Einstecken der Batteriezellen 19 gebildet.

## Patentansprüche

1. Wärmeableiter mit einem zur Anlage an einer oder mehreren Batteriezellen vorgesehenen graphithaltigen Flachmaterial, welches einen Graphitexpandatformling enthält, der eine Dichte von 0,05 bis 0,6 g/cm³ aufweist, und welcher zwei Hauptflächen besitzt, wobei auf zumindest einer Hauptfläche eine Kunststoffschicht angeordnet ist, wobei die zumindest eine Kunststoffschicht durchbrochen ausgebildet ist, **dadurch gekennzeichnet, dass** die zumindest eine Kunststoffschicht eine Lochstruktur, eine Streifen- und/oder eine Mäanderstruktur aufweist.

2. Wärmeableiter nach Anspruch 1, **dadurch gekennzeichnet, dass** auf beiden Hauptflächen des Graphitexpandatformlings eine Kunststoffschicht vorgesehen ist.

3. Wärmeableiter nach Anspruch 2, **dadurch gekennzeichnet, dass** die Kunststoffschicht auf der ersten Hauptfläche und die Kunststoffschicht auf der zweiten Hauptfläche unterschiedlich ausgebildet sind.

4. Wärmeableiter nach zumindest einem der Ansprüche 1 bis 3, **dadurch gekennzeichnet, dass** die zumindest eine Kunststoffschicht zumindest einen der Kunststoffe aus der Gruppe umfassend Polyethylenterephtalat (PET), wie etwa biaxial orientiertes PET, Polyolefine, wie Polyethylen (PE) und Polypropylen (PP), Polyimide (PI), Fluorkunststoffe, wie etwa PVDF oder PTFE, Polyvinylchlorid (PVC), Polystyrol (PS), Polyester, Polycarbonat und Biopolymere, wie etwa Polylactid (PLA), Celluloseacetet (CA) und Stärkeblends, oder einer Mischung daraus enthält.

5. Wärmeableiter nach zumindest einem der Ansprüche 1 bis 4, **dadurch gekennzeichnet, dass** die Kunststoffschicht eine Kunststofffolie ist.

6. Wärmeableiter nach Anspruch 5, **dadurch gekennzeichnet, dass** der Graphitexpandatformling mit der zumindest einen Kunststofffolie mit Klebstoff oder kleberfrei verbunden sind.

7. Wärmeableiter nach Anspruch 6, **dadurch gekennzeichnet, dass** die kleberfreie Verbindung durch zumindest teilweises Aufschmelzen eines Kunststoffs der Kunststofffolie hergestellt ist.

8. Wärmeableiter nach zumindest einem der Ansprüche 1 bis 7, **dadurch gekennzeichnet, dass** der Graphitexpandatformling selbst einen weiteren Kunststoff oder ein Phasenwechselmaterial, insbesondere ein gekapseltes Phasenwechselmaterial und/oder ein Phasenwechselmaterial mit einem fest-fest-Phasenübergang im Anwendungstemperaturbereich und/oder ein an eine Trägerstruktur gebundenes Phasenwechselmaterial enthält,

9. Wärmeableiter nach Anspruch 8, **dadurch gekennzeichnet, dass** der weitere Kunststoff des Graphitexpandatformlings der gleiche Kunststoff wie der Kunststoff der Kunststofffolie ist.

10. Wärmeableiter nach Anspruch 9, **dadurch gekennzeichnet, dass** der weitere Kunststoff in den Graphitexpandatformling durch Imprägnieren eingebracht ist.

11. Wärmeableiter nach Anspruch 10, **dadurch gekennzeichnet, dass** der Graphitexpandatformling oberflächlich oder bis in seinen Kernbereich mit Harz als weiterem Kunststoff imprägniert ist.

12. Elektrischer Energiespeicher mit mindestens einer Batteriezelle und einem an mindestens einer Außenfläche der Batteriezelle angeordnetem Wärmeableiter nach zumindest einem der Ansprüche 1 bis 11.

## Claims

1. Heat sink comprising a graphite-containing flat material provided for bearing against one or more battery cells, which flat material contains an expanded graphite blank which has a density of from 0.05 to 0.6 g/cm³, and which heat sink comprises two main surfaces, a plastics layer being arranged on at least one main surface, the at least one plastics layer being perforated, **characterised in that** the at least one plastics layer has a perforated structure, a striped structure and/or a meandering structure.

2. Heat sink according to claim 1, **characterised in that** a plastics layer is provided on the two main surfaces of the expanded graphite blank.

3. Heat sink according to claim 2, **characterised in that** the plastics layer on the first main surface and the plastics layer on the second main surface are of different designs.

4. Heat sink according to at least one of claims 1 to 3, **characterised in that** the at least one plastics layer contains at least one of the plastics materials from the group comprising polyethylene terephthalate (PET), such as biaxially oriented PET, polyolefins, such as polyethylene (PE) and polypropylene (PP), polyimides (PI), fluoroplastics, such as PVDF or PTFE, polyvinyl chloride (PVC), polystyrene (PS), polyester, polycarbonate and biopolymers, such as polylactide (PLA), cellulose acetate (CA) and starch blends, or a mixture thereof.

5. Heat sink according to at least one of claims 1 to 4, **characterised in that** the plastics layer is a plastics film.

6. Heat sink according to claim 5, **characterised in that** the expanded graphite blank is connected to the at least one plastics film by means of adhesive or in an adhesive-free manner.

7. Heat sink according to claim 6, **characterised in that** the adhesive-free connection is produced by melting on, at least in part, a plastics material of the plastics film.

8. Heat sink according to at least one of claims 1 to 7, **characterised in that** the expanded graphite blank itself contains an additional plastics material or a phase change material, in particular an encapsulated phase change material and/or a phase change material having a solid-solid phase transition in the application temperature range and/or a phase change material bonded to a support structure.

9. Heat sink according to claim 8, **characterised in that** the additional plastics material of the expanded graphite blank is the same plastics material as the plastics material of the plastics film.

10. Heat sink according to claim 9, **characterised in that** the additional plastics material is introduced into the expanded graphite blank by impregnation.

11. Heat sink according to claim 10 **characterised in that** the expanded graphite blank is impregnated with resin, as the additional plastics material, on its surface or as far as its core region.

12. Electrical energy accumulator comprising at least one battery cell and one heat sink according to at least one of claims 1 to 11 arranged on at least one outer surface of the battery cell.

## Revendications

1. Dissipateur de chaleur avec un matériau plat contenant du graphite, qui est prévu pour être mis en appui sur une ou plusieurs cellules de batterie, lequel matériau contient une ébauche en graphite expansé qui présente une densité comprise entre 0,05 et 0,6 g/cm³, et lequel dissipateur de chaleur possède deux surfaces principales, selon lequel une couche de plastique est disposée sur tout au moins une surface principale, selon lequel la tout au moins une couche de plastique est conçue de manière ajourée, **caractérisé en ce que** la tout au moins une couche de plastique présente une structure à trous, une structure en bandes et/ou une structure en méandres.

2. Dissipateur de chaleur selon la revendication 1, **caractérisé en ce qu'**une couche de plastique est prévue sur les deux surfaces principales de l'ébauche en graphite expansé.

3. Dissipateur de chaleur selon la revendication 2. **caractérisé en ce que** la couche de plastique sur la première surface principale et la couche de plastique sur la deuxième surface principale sont conçues de manière différente.

4. Dissipateur de chaleur selon tout au moins l'une des revendications 1 à 3, **caractérisé en ce que** la tout au moins une couche de plastique contient tout au moins l'une des matières plastiques issues du groupe constitué par le polyéthylène téréphtalate (PET) tel que par exemple le PET orienté dans le sens biaxial, les polyoléfines telles que le polyéthylène (PE) et le polypropylène (PP), les polyimides (PI), les matières plastiques fluorées telles que par exemple le PVDF ou le PTFE, le chlorure de polyvinyle (PVC), le polystyrène (PS), le polyester, le polycarbonate et les biopolymères tels que par exemple le polylactide (PLA), l'acétate de cellulose (CA) et des mélanges d'amidon, ou un mélange issu de ces matières,

5. Dissipateur de chaleur selon tout au moins l'une des revendications 1 à 4, **caractérisé en ce que** la couche de plastique est un film en matière plastique.

6. Dissipateur de chaleur selon la revendication 5, **caractérisé en ce que** l'ébauche en graphite expansé est reliée avec le tout au moins un film en matière plastique au moyen d'un agent adhésif ou bien sans aucun agent adhésif.

7. Dissipateur de chaleur selon la revendication 6, **caractérisé en ce que** la jonction exempte de colle est réalisée par l'intermédiaire de la fusion tout au moins partielle d'une matière plastique du film en matière plastique.

8. Dissipateur de chaleur selon tout au moins l'une des revendications 1 à 7, **caractérisé en ce que** l'ébauche en graphite expansé proprement dite contient une autre matière plastique ou un matériau à changement de phase, en particulier un matériau à changement de phase encapsulé et/ou un matériau à changement de phase avec une transition de phase solide / solide dans la plage de la température d'application et/ou un matériau à changement de phase qui est lié à une structure de support.

9. Dissipateur de chaleur selon la revendication 8, **caractérisé en ce que** l'autre matière plastique de l'ébauche en graphite expansé est constituée de la même matière plastique que la matière plastique du film en matière plastique.

10. Dissipateur de chaleur selon la revendication 9, **caractérisé en ce que** l'autre matière plastique est mise en place dans l'ébauche en graphite expansé au moyen d'un procédé d'imprégnation.

11. Dissipateur de chaleur selon la revendication 10, **caractérisé en ce que** l'ébauche en graphite expansé est imprégnée de résine à sa surface ou jusque dans la zone de son noyau, ladite résine formant l'autre matière plastique.

12. Accumulateur d'énergie électrique avec au moins une cellule de batterie et un dissipateur de chaleur qui est disposé au niveau d'au moins une surface externe de la cellule de batterie, selon tout au moins l'une des revendications 1 à 11.
